# EUROPÄISCHE PATENTSCHRIFT

(11) **EP 1 000 884 B1**
(45) Veröffentlichungstag und Bekanntmachung des Hinweises auf die Patenterteilung: **16.05.2001**
(21) Anmeldenummer: 98121665.8
(22) Anmeldetag: 13.11.1998
(51) Int. Cl.: B65G 51/32

(54) **Rohrpoststation**
Pneumatic tube conveyor station
Station de courrier par tube

(43) Veröffentlichungstag der Anmeldung: 17.05.2000
(73) Patentinhaber: Aerocom GmbH & Co. Communicationsystems, 71394 Kernen (DE)
(72) Erfinder: Prinz, Günther, 73614 Schorndorf (DE)
(74) Vertreter: KOHLER SCHMID + PARTNER

(56) Entgegenhaltungen:
- CH-A- 645 590
- FR-A- 2 291 129
- US-A- 4 437 797
- US-A- 4 459 069

## Beschreibung

Die Erfindung bezieht sich auf eine Rohrpoststation mit einem mindestens von einer Sende- und/oder Empfangsöffnung zu einer Fahrrohröffnung bewegbaren, zur Aufnahme einer Rohrpostbüchse ausgebildeten Schieberohr. Bei den bekannten Stationen wird das Schieberohr meistens über einen motorisch angetriebenen Zahnstangenantrieb bewegt. Außerdem ist dabei noch ein Büchsenlift vorgesehen, welcher die Rohrpostbüchse in ihrer Stellung an der Sende- und/oder Empfangsöffnung anhebt, so daß sie mit der Hand erfaßt und herausgenommen werden kann. Für diesen Büchsenlift ist noch ein weiterer Antrieb erforderlich. Eine derartige Sende- und Empfangsstation ist aus der CH-A-645 590 bekannt.

Die Aufgabe der vorliegenden Erfindung ist es, eine Vorrichtung zu schaffen, bei welcher mit einfachen Mitteln und nur einem einzigen Antrieb sowohl die Verschiebung des Schieberohres als auch das Heben und Senken des Büchsenliftes erfolgen kann.

Erfindungsgemäß wird dies erreicht, indem etwa parallel zur Verschiebeebene des Schieberohres ein von einem Antrieb schwenkbarer Hebel gelagert ist, welcher kraftschlüssig am Büchsenlift angreift und einen, eine etwa in Hubrichtung des Büchsenliftes am Schieberohr vorgesehene an beiden Enden offene Kulisse durchlaufenden Mitnehmer aufweist. Beim Absenden einer Rohrpostbüchse wird der Hebel durch den Antrieb nach oben geschwenkt und nimmt dabei den Büchsenlift mit. Nach dem Einsetzen der Rohrpostbüchse wird der Hebel dann nach unten geschwenkt, so daß die Rohrpostbüchse im Schieberohr nach unten gleitet. Anschließend greift der Mitnehmer des Hebels in die Kulisse am Schieberohr ein und nimmt bei seiner weiteren Schwenkbewegung das Schieberohr in Richtung Fahrrohröffnung mit.

Beim Empfang einer Rohrpostbüchse verläuft der Vorgang in umgekehrter Richtung. Zunächst wird durch die Schwenkbewegung des Hebels, dessen Mitnehmer sich noch in der Kulisse befindet, das Schieberohr unter die Sendeund/oder Empfangsöffnung geschoben. Bei der weiteren Schwenkbewegung des Hebels tritt der Mitnehmer aus der Kulisse aus und hebt den Büchsenlift an, so daß die Büchse mit ihrem Oberteil aus dem Schieberohr austritt und entnommen werden kann.

Vorzugsweise ist der Büchsenlift mit einem Querausleger versehen, welcher vom Hebel untergriffen wird. Dabei ist es zweckmäßig, etwa am freien Ende des Hebels einen Querzapfen vorzusehen, der seinerseits am Querausleger des Büchsenliftes anliegt.

Bei einer Rohrpoststation mit einer gesonderten Sendeklappe an der Sende- und Empfangsöffnung wirkt der Büchsenlift nach einem weiteren Merkmal der Erfindung mit einem die Sendeklappe öffnenden und schließenden Stössel zusammen. Eine besonders einfache Ausführungsform ergibt sich dabei, wenn man den Stössel auf dem Querausleger des Büchsenliftes zur Auflage bringt. Es ist aber auch durchaus möglich, den Stössel unmittelbar auf dem Hebel aufsetzen zu lassen. Zweckmäßigerweise sind für die Sendeklappe Endschalter in beiden Stellungen vorgesehen, welche vom Hebel betätigbar sind.

Es ist selbstverständlich auch möglich, den Hebel in anders aufgebauten Varianten von Rohrpoststationen zu verwenden, beispielsweise in Stationen mit mehreren Fahrrohren oder bei Anordnungen mit mehreren Büchsenliften. Bei einer weiteren bevorzugten Ausführungsform ist der Antrieb des Schwenkarmes in einer Mittelstellung des Schieberohres zwischen den beiden Öffnungen durch eine Schaltvorrichtung abschaltbar, so daß sich eine Sicherheitsstellung ergibt, in welcher die Rohrpostbüchse weder entnommen noch abgesandt werden kann. Diese Schaltvorrichtung kann dann nur durch besondere Schlüssel, Codekarten oder dergleichen betätigt werden.

Die Zeichnung zeigt ein Ausführungsbeispiel der Erfindung. Es stellen dar:

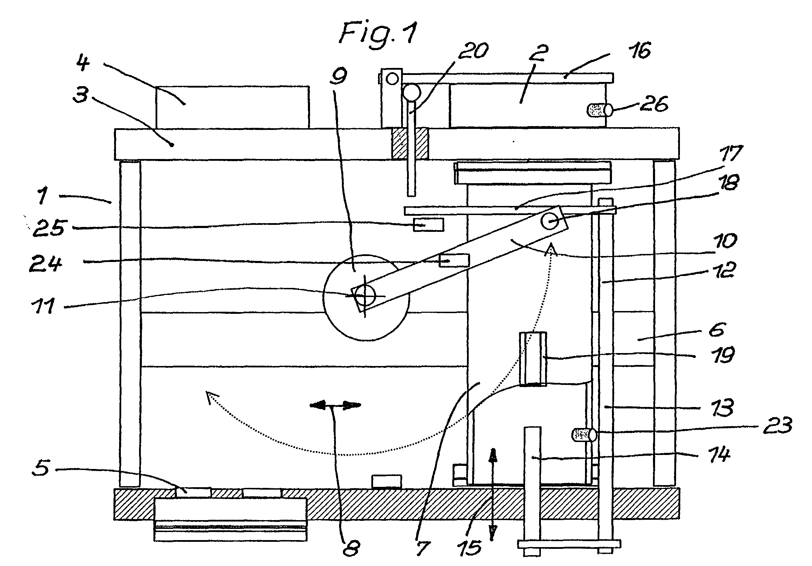

- Figur 1: eine teilweise geschnittene Rohrpoststation, mit abgebrochenem Schieberohr.
- Figuren 2 bis 6: eine vereinfachte und verkleinerte Darstellung nach Figur 1 in den verschiedenen Positionen beim Sendevorgang.
- Figuren 7 bis 11: eine vereinfachte und verkleinerte Darstellung nach Figur 1 in den verschiedenen Positionen beim Empfangsvorgang.

Die Rohrpoststation 1 weist eine Sende- und Empfangsöffnung 2 und oberhalb einer Fahrrohröffnung 3 einen Fahrrohranschluß 4 auf. Gegenüber der Fahrrohröffnung 3 ist eine durch ein Ventil abgeschlossene Luftöffnung 5 angeordnet. Längs einer Parallelführung 6 ist ein Schieberohr 7 in Pfeilrichtung 8 hin und her bewegbar. Etwa in der Mitte der Rohrpoststation 1 ist ein Motor mit Getriebe 9 gelagert, welcher einen Hebel 10 um dessen Achse 11 schwenkt.

Unterhalb der Sende- und Empfangsöffnung 2 ist ein Büchsenlift 12 vorgesehen, welcher aus einer Führungsstange 13 und einem mit ihr verbundenen Hubstift 14 besteht. Der Hubstift 14 ist in Hubrichtung 15 längs verschiebbar und ragt in seiner untersten Stellung nicht mehr in das Innere der Rohrpoststation 1 hinein. Die Sende- und Empfangsöffnung 2 ist durch eine aufschwenkbare Sendeklappe 16 verschlossen.

Der Büchsenlift 12 weist einen Querausleger 17 auf, welcher von einem als Mitnehmer ausgebildeten Zapfen 18 des Hebels 10 untergriffen wird. Desweiteren ist am Schieberohr 7 eine nach beiden Seiten offene Kulisse 19 für den Zapfen 8 vorgesehen. Der Querausleger 17 arbeitet seinerseits mit der Sendeklappe 16 zusammen. Diese stützt sich auf einem Stössel 20 ab, welcher bei einer Aufwärtsbewegung des Büchsenliftes 12 über den Querausleger 17 nach oben verschoben wird, wobei dann die Sendeklappe 16 in ihre offene Stellung schwenkt. Beim Absenken des Büchsenliftes 12 schließt sich dann die Sendeklappe 16 durch Schwerkraft oder durch eine nicht dargestellte Feder.

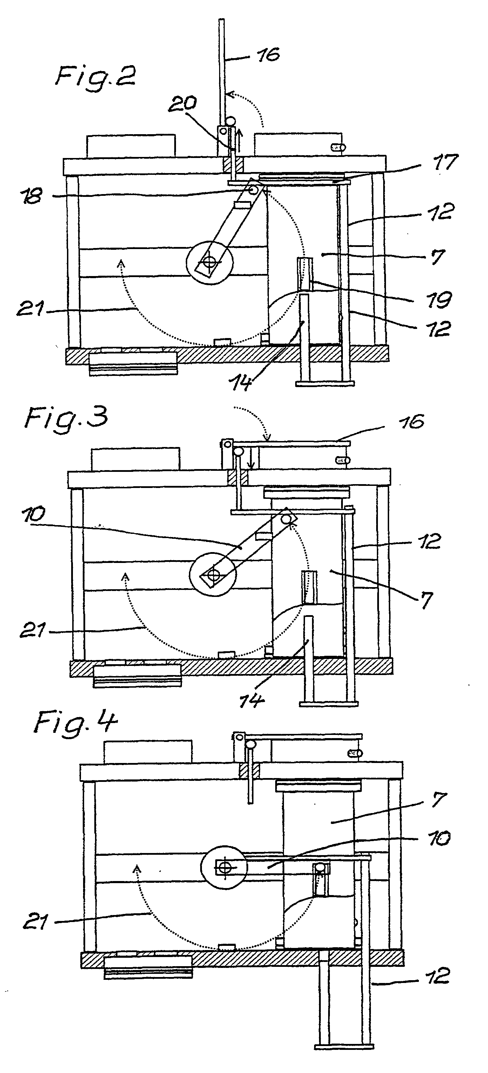

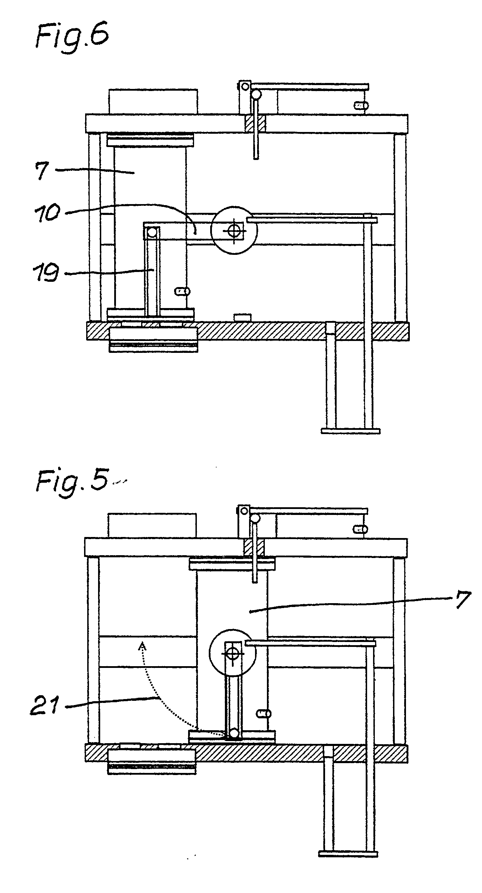

Bei dem in den Figuren 2 bis 6 dargestellten Sendevorgang befindet sich der Büchsenlift 12 zunächst in seiner obersten Stellung, wobei die Sendeklappe 16 über den Querausleger 17 des Büchsenliftes 12 und den Stössel 20 geöffnet ist. Die abzusendende nicht dargestellte Rohrpostbüchse kann nunmehr in das Schieberohr 7 eingesetzt werden. Anschließend schwenkt der Hebel 10 im Uhrzeigersinn, wobei sich der Zapfen 18 auf der punktiert eingezeichneten Kreisbahn 21 bewegt. Dadurch bewegen sich der Querausleger 17 des Büchsenliftes 12, der Stössel 20 und der Hubstift 14 nach unten. Die Rohrpostbüchse senkt sich um ein gewisses Maß ab, und der Deckel 16 schließt sich (Figur 3). Sobald der Hebel 10 im Uhrzeigersinn in die waagrechte Lage nach Figur 4 geschwenkt ist, befinden sich der Büchsenlift 12 und damit die Rohrpostbüchse in ihrer untersten Stellung, wobei der Hubstift 14 den Weg für das Schieberohr 7 freigibt. Dabei tritt der Zapfen 18 in die Kulisse 19 ein, und beim Weiterschwenken des Hebels 10 im Uhrzeigersinn wird dann das Schieberohr 7 zunächst in eine Mittelstellung nach Figur 5 mitgenommen. Es handelt sich hierbei um eine Sicherheitsposition, in welcher die Rohrpostbüchse weder entnommen noch abgesandt werden kann. In dieser Stellung wird der Antrieb 9 über einen vom Schieberohr 7 betätigten Schalter 22 abgeschaltet bis der Schalter durch einen Schlüssel, einer Codekarte oder dergleichen wiederum umgeschaltet wird. Dann schwenkt der Hebel 10 in die Stellung nach Figur 6, wobei das Schieberohr 7 unter die Fahrrohröffnung 3 zu liegen kommt. Nunmehr kann die Rohrpostbüchse in bekannter Weise abgesandt werden.

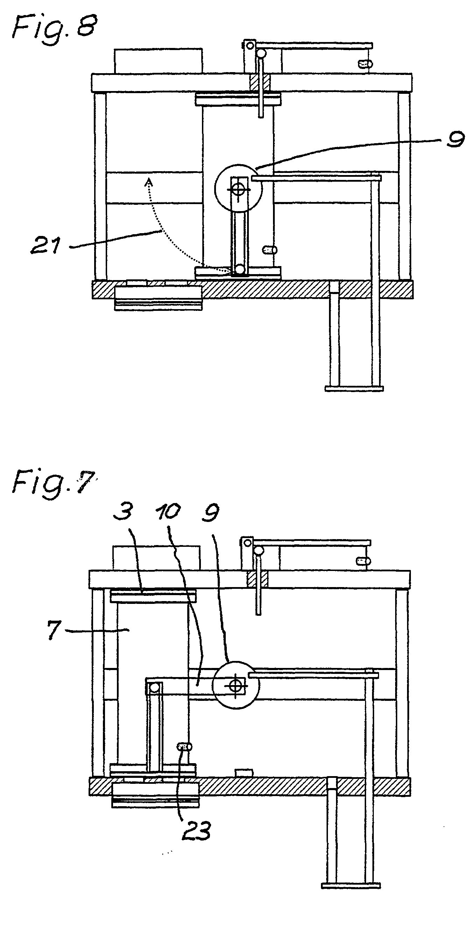

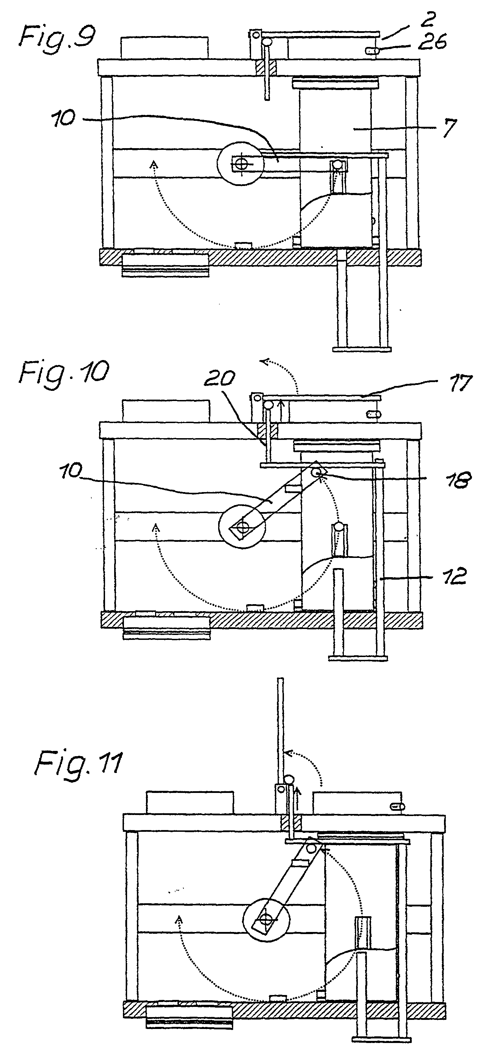

Beim Empfang einer Rohrpostbüchse läuft der Vorgang in umgekehrter Richtung ab. Dabei befindet sich, wie Figur 7 erkennen läßt, das Schieberohr 7 vor der Fahrrohröffnung 3. Sobald eine nicht dargestellt Rohrpostbüchse eintrifft, wird durch einen Sensor 23 der Antrieb 9 eingeschaltet, und der Hebel 10 schwenkt entgegen dem Uhrzeigersinn nach unten bis in Figur 8 wiederum die Mittelstellung erreicht wird, in welcher der Antrieb über den Schalter 22 wieder ausgeschaltet wird. Nach Betätigung des Schalters 22 erfolgt dann über den Hebel 10 die weitere Verschiebung des Schieberohrs 7 in die Stellung unter der Sende- und Empfangsöffnung 2 gemäß Figur 9. Beim Weiterdrehen des Hebels 10 tritt der Zapfen 18 aus der Kulisse 19 aus und hebt dann den Querausleger 17 des Büchsenliftes 12 und damit die Rohrpostbüchse an. Sobald der Querausleger 17 auf den Stössel 20 trifft, wird die Sendeklappe 16 angehoben und geöffnet. In der Stellung nach Figur 11 ragt dann die nicht dargestellte Rohrpostbüchse nach oben heraus und kann mit der Hand entnommen werden.

Um die beiden Endstellungen der Sendeklappe 16 zu sichern, sind noch zwei Endschalter 24 und 25 vorgesehen, welche vom Hebel 10 geschaltet werden. Außer dem Sensor 23, welcher anspricht,wenn sich eine Rohrpostbüchse im Schieberohr befindet, ist noch ein weiterer Sensor 26 vorgesehen, welcher anzeigt, daß eine Rohrpostbüchse in der Sende- und Empfangsöffnung 2 liegt.

## Patentansprüche

1. Rohrpoststation mit einem mindestens von einer Sende- und/oder Empfangsöffnung (2) zu einer Fahrrohröffnung (3) bewegbaren zur Aufnahme einer Rohrpostbüchse ausgebildeten Schieberohr (7) und wenigstens einem Büchsenlift (12), dadurch gekennzeichnet, daß etwa parallel zur Verschiebeebene (8) des Schieberohres (7) ein über einen Antrieb (9) schwenkbarer Hebel (10) gelagert ist, welcher kraftschlüssig den Büchsenlift (12) untergreift und einen, eine etwa in Hubrichtung (15) des Büchsenliftes (12) am Schieberohr (7) vorgesehene an beiden Enden offene Kulisse (19) durchfahrenden Mitnehmer (18) aufweist.

2. Rohrpoststation nach Anspruch 1, dadurch gekennzeichnet, daß der Büchsenlift (12) einen Querausleger (17) aufweist, welchen der Schwenkhebel (10) untergreift.

3. Rohrpoststation nach Anspruch 2, dadurch gekennzeichnet, daß der Mitnehmer als Querzapfen (18) etwa am freien Ende des Schwenkhebels (10) angeordnet ist und den Querausleger (17) des Büchsenliftes (12) untergreift.

4. Rohrpoststation mit einer Sendeklappe an der Sende - und/oder Empfangsöffnung dadurch gekennzeichnet, daß der Büchsenlift (12) mit einem die Sendeklappe (16) öffnenden und schließenden Stössel (20) zusammenwirkt.

5. Rohrpoststation nach Anspruch 4, dadurch gekennzeichnet, daß die Hubbewegung des Stössels (20) über den Querausleger (17) des Büchsenliftes (12) erfolgt.

6. Rohrpostanlage nach einem der vorhergehenden Ansprüche 4 and 5, dadurch gekennzeichnet, daß der Schwenkhebel (10) einen Endschalter für die offene und geschlossene Stellung der Sendeklappe (16) betätigt.

7. Rohrpostanlage nach einem oder mehreren der vorhergehenden Ansprüche, dadurch gekennzeichnet, daß der Antrieb (9) des Schwenkhebels (10) in einer Sicherungsstellung (Figuren 5 und 8) des Schieberohres (7) zwischen der Sende- und/oder Empfangsöffnung (2) und der Fahrrohröffnung (3) durch eine vom Schieberohr betätigte Schaltvorrichtung (22) abschaltbar ist.

## Claims

1. Pneumatic tube conveyor station having a sliding tube (7) which is movable at least from a sending and/or receiving opening (2) to a forwarding tube opening (3) and which is constructed to accommodate a pneumatic tube conveyor capsule, and having at least one capsule lift (12), characterised in that a lever (10) pivotable by means of a drive (9) is supported approximately parallel with the displacement plane (8) of the sliding tube (7), which lever engages in a non-positive-locking manner under the capsule lift (12) and has a carrier (18) passing through a guide member (19) which is provided on the sliding tube (7) approximately in the lifting direction (15) of the capsule lift (12) and which is open at both ends.

2. Pneumatic tube conveyor station according to claim 1, characterised in that the capsule lift (12) has a transverse extension arm (17) under which the pivoted lever (10) engages.

3. Pneumatic tube conveyor station according to claim 2, characterised in that the carrier is arranged in the form of a transverse pin (18) approximately at the free end of the pivoted lever (10) and engages under the transverse extension arm (17) of the capsule lift (12).

4. Pneumatic tube conveyor station according to one or more of the preceding claims, having a sending flap at the sending and/or receiving opening, characterised in that the capsule lift (12) cooperates with a driver rod (20) opening and closing the sending flap (16).

5. Pneumatic tube conveyor station according to claim 4, characterised in that the lifting movement of the driver rod (20) is effected by means of the transverse extension arm (17) of the capsule lift (12).

6. Pneumatic tube conveyor station according to either of the preceding claims 4 and 5, characterised in that the pivoted lever (10) operates a limit switch for the open and closed position of the sending flap (16).

7. Pneumatic tube conveyor station according to one or more of the preceding claims, characterised in that the drive (9) of the pivoted lever (10) can be switched off in a safety position (Figures 5 and 8) of the sliding tube (7) between the sending and/or receiving opening (2) and the forwarding tube opening (3) by a switching device (22) operated by the sliding tube.

## Revendications

1. Station de poste tubulaire, comprenant un tube de transfert (7) conçu pour recevoir une cartouche pour transport par tube pneumatique, déplaçable au moins depuis une ouverture d'expéditeur et/ou une ouverture de récepteur (2) vers une ouverture de tube de trafic (3) et au moins un élévateur de cartouche (12), caractérisée en ce qu'un levier (10) pouvant pivoter par le biais d'une commande (9) est monté approximativement parallèlement au plan de déplacement (8) du tube de transfert (7), ce levier venant en prise par force et par en dessous avec l'élévateur de cartouche (12) et présentant un entraîneur (18) passant par une coulisse (19) ouverte aux deux extrémités, prévu approximativement dans la direction de poussée (15) de l'élévateur de cartouche (12) sur le tube de transfert (7).

2. Station de poste tubulaire selon la revendication 1, caractérisée en ce que l'élévateur de cartouche (12) présente un bras transversal (17) avec la partie inférieure duquel le levier pivotant (10) vient en prise.

3. Station de poste tubulaire selon la revendication 2, caractérisée en ce que l'entraîneur est disposé en tant que tourillon transversal (18) approximativement à l'extrémité libre du levier pivotant (10) et vient en prise par le dessous avec le bras transversal (17) de l'élévateur de cartouche (12).

4. Station de poste tubulaire selon l'une ou plusieurs des revendications précédentes, comprenant une trappe d'envoi au niveau de l'ouverture d'expéditeur et/ou de l'ouverture de récepteur, caractérisée en ce que l'élévateur de cartouche (12) coopère avec une tige-poussoir (20) ouvrant et fermant la trappe d'envoi (16).

5. Station de poste tubulaire selon la revendication 4, caractérisée en ce que le mouvement de poussée de la tige-poussoir (20) s'effectue par le biais du bras transversal (17) de l'élévateur de cartouche (12).

6. Installation de poste tubulaire selon l'une quelconque des revendications précédentes 4 et 5, caractérisée en ce que le levier pivotant (10) actionne un commutateur de fin de course pour la position ouverte et fermée de la trappe d'envoi (16).

7. Installation de poste tubulaire selon l'une ou plusieurs des revendications précédentes, caractérisée en ce que la commande (9) du levier pivotant (10) peut être désengagée dans une position de sécurité (figures 5 et 8) du tube de transfert (7) entre l'ouverture d'expéditeur et/ou de récepteur (2) et l'ouverture de tube de trafic (3), par un dispositif de commutation (22) activable par le tube de transfert.
